Europäisches Patentamt

European Patent Office

Office européen des brevets

(19)

(11) Veröffentlichungsnummer: **0 158 042**
**B1**

(12) **EUROPÄISCHE PATENTSCHRIFT**

(45) Veröffentlichungstag der Patentschrift: 03.10.90

(51) Int. Cl.⁵: **E 03 F 3/06**

(21) Anmeldenummer: **85101552.9**

(22) Anmeldetag: **13.02.85**

(60) Teilanmeldung 89114356.2 eingereicht am 13/02/85.

(54) **Vorrichtung zum Einbau von Kunststoffrohrstücken in Abwasserrohre.**

(30) Priorität: 09.04.84 DE 3413294

(43) Veröffentlichungstag der Anmeldung:
16.10.85 Patentblatt 85/42

(45) Bekanntmachung des Hinweises auf die
Patenterteilung:
03.10.90 Patentblatt 90/40

(84) Benannte Vertragsstaaten:
AT BE CH DE FR GB IT LI LU NL SE

(56) Entgegenhaltungen:
EP-A-0 082 223
EP-A-0 110 664
WO-A-82/04086
WO-A-83/02490
GB-A- 3 801
US-A-4 197 908

(73) Patentinhaber: KWH Pipe Anlagentechnik GmbH
Daimlerstrasse 5 - 7
D-4156 Willich (DE)

(72) Erfinder: Jürgenlohmann, Peter
Rembrandtweg 13a
D-4830 Gütersloh 11 (DE)
Erfinder: Schröder, Günter
Riesebusch 14
D-2407 Bad Schwartau (DE)

(74) Vertreter: Patentanwälte Dipl.-Ing. Bodo
Thielking Dipl.-Ing. Otto Elbertzhagen
Gadderbaumer Strasse 20
D-4800 Bielefeld 1 (DE)

Courier Press, Leamington Spa, England.

EP 0 158 042 B1

## Beschreibung

Die Erfindung betrifft eine Vorrichtung zum Einbau von Kunststoffrohrstücken in zu sanierende Abwasserrohre mit seitlichem Abgang, wobei an den Kunststoffrohrstücken eine seitliche Abgangsöffnung angebracht ist, die bei eingebautem Kunststoffrohrstück an der Stelle des Abgangs liegt, mit einer Transportvorrichtung zum Transportieren und Zusammenfügen der Kunststoffrohrstücke innerhalb der Abwasserrohre.

Das Einbringen von Rohrstücken, z.B. Kurzrohren, in zu sanierende Abwasserrohrleitungen ist überall dort unproblematisch, wo eine durchgehende Strecke ohne seitliche Abgänge vorliegt. In diesem Fall kann die Sanierung ohne äußere Erdarbeiten von den Kanalschächten aus vorgenommen werden.

Problematisch ist die Sanierung an Stellen der Abwasserrohre, die seitliche Abgänge aufweisen, beispielsweise für Hausanschlüsse. Damit solche Hausanschlüsse mit dem innenliegenden Kunststoffrohr verbunden werden können, ist es erforderlich, einen seitlichen Durchbruch im innenliegenden Rohr vorzusehen. Solche Durchbrüche können vom Kunststoffrohrinneren aus gefräst oder mit Hochdruckstrahl hergestellt werden. Man kann auch die Anschlußstelle aufgraben und den Durchbruch von außen vornehmen. Das Aufgraben der Anschlußstelle ist die aufwendigste und teuerste Vorgehensweise. Aber auch das Fräsen und die Herstellung mittels Hochdruckstrahl vom Rohrinneren aus ist nicht unproblematisch. Zum einen ist es schwierig, die genaue Position der seitlichen Abgänge zu finden, nachdem das ringsum geschlossene Rohrstück bereits in dem zu sanierenden Kanalrohr sitzt und die Anschlußöffnung von innen verdeckt. Zum anderen ist es schwierig, die erforderlichen Fräseinrichtungen in kleinen Rohren mit beispielsweise nur 200 mm Durchmesser anzubringen und so anzusetzen, daß die Bohrung sowohl in Längsrichtung des Rohres an der richtigen Stelle, als auch im richtigen Winkel angeordnet wird.

Zur Vermeidung dieser Schwierigkeiten ist es bekannt, die seitliche Abgangsöffnung im Kunststoffrohr über den seitlichen Abgang, z.B. den Hausanschlußkanal, von außen her vorzunehmen (AT 299 827). Hierbei ist es nachteilig, daß die Rohrleitungen der seitlichen Abgänge häufig mit Bögen verlegt sind, so daß die Schneidvorrichtungen nicht durch die Leitungen der seitlichen Abgänge transportiert werden können. Darüber hinaus ist diese Vorgehensweise auch deshalb zeitraubend und aufwendig, weil diese Rohrleitungen naufig einen kleinen Durchmesser, zum Teil unter 150 mm, aufweisen.

Es ist eine Vorrichtung zum Einbau von Kunststoffrohrstücken bekannt (EP-A2-0 110 664), welche eine im fertigen Rohrstück fixierbare Blase aufweist, welche einen Längskanal besitzt. Durch den Längskanal wird ein Seil mit einem Stangenbereich hindurchgezogen. An dem Seil mit Stange wird eine Meßvorrichtung in die Meßposition gezogen und mit Hilfe einer Fernsehkamera und eines verdrehbaren Spiegels wird anhand des an der Meßvorrichtung befindlichen Maßstabs die Begrenzung des Rohrabzweigs in axialer Richtung festgestellt. Bezugsbasis ist dabei die Stirnseite des fertigen Rohrstücks, an dem die Meßvorrichtung anliegt. Außerdem wird die Winkellage des Abzweigs über die Skala ermittelt. Nach dem Ermitteln dieser Werte wird die Meßvorrichtung aus dem noch nicht sanierten Rohrstück herausgezogen und für den Einbau des neuen Rohrstücks nicht weiterverwendet.

Anschließend erfolgt außerhalb des zu sanierenden Rohrstücks das Einbringen der erforderlichen Abzweigbohrung in das nächste einzubringende neue Rohrstück. In das neue, mit Abzweigbohrung versehene Rohrstück wird eine Blase mit einem Kanal eingepreßt. Dabei muß darauf geachtet werden, daß die Winkellage dieser Blase und die sich daraus ergebende Lage des Durchgangskanals in der Blase mit der vorher ausgemessenen Winkellage der Abzweigbohrung korrespondiert. Anschließend wird das neue Rohrstück mit der winkelgerecht eingesetzten Blase und einer Fernsehkamera zusammen mittels eines Seils durch das noch nicht sanierte Rohrstück bis in die Einbauposition vorgezogen. Dies erfolgt mit Hilfe des Seils, welches sich durch den Führungskanal der Blase erstreckt, welche im fertigen Rohrstück sitzt und schon zur Vermessung der Abzweigöffnung verwendet worden ist.

Das Vorziehen des neuen Rohrstücks mit der zweiten Blase ist in der Praxis ein extrem kritischer Vorgang. Es sind lange Vortriebsstrecken von beispielsweise 50 m zu überwinden. Dabei erweist es sich in der Praxis als ausgeschlossen, die vorher eingestellte und gewünschte Winkellage des neuen Rohrstücks über die gesamte Vorschubstrecke beizubehalten. In der Praxis können ohne weiteres unerwünschte Verdrehungen um 180° gegenüber der Ausgangslage auftreten. Wenn solche Verdrehungen auftreten, ist es ausgeschlossen, allein durch die Führung eines Seils bzw. einer Stange in dem Führungskanal der ortsfesten Blase eine ordnungsgemäße Rückdrehung zu erreichen. In vielen Fällen erfolgt ein Verklemmen.

Darüber hinaus sind das bekannte Verfahren und die bekannte Vorrichtung deshalb nicht funktionsgerecht, weil in der Praxis bei zu sanierenden Rohrleitungen üblicherweise Muffenversätze bestehen, die zur Folge haben, daß ein neues, lediglich über den Boden vorgezogenes Rohrstück bereits beim ersten Versatz hängenbleiben muß. Ein solches Verklemmen ist bei der Verwendung eines Zugseils mit Blase als Transportmittel notwendig überall dort gegeben, wo nicht ideale Einbaubedingungen herrschen.

Der Erfindung liegt die Aufgabe zugrunde, eine Vorrichtung der im Oberbegriff erwähnten Art zu schaffen, mit der ein Einbau der Rohrstücke in genau ausgerichteter Lage mit geringem Aufwand und in einfacher Weise möglich ist.

Die Lösung dieser Aufgabe erfolgt mit den Merkmalen des Kennzeichnungsteils von Anspruch 1.

Zur Verwendung der erfindungsgemäßen Vorrichtung erfolgt zunächst eine Grobeinmessung der jeweils vorhandenen Abzweigstellen mit einer Fernsehkamera. Diese verschiedenen Abzweigstellen werden in einen Plan eingezeichnet und eine genauere Ausmessung erfolgt jeweils dann, wenn das letzte vollständige Rohrstück bis in die Nähe des nächsten Abzweigs gekommen ist. Dies ist dann der Fall, wenn das nächste einzubauende Kunststoffrohr die Abzweigstelle überdecken würde. Es erfolgt ein genaues Abmessen der Abzweigstelle in Achsrichtung, und das unter der Abzweigstelle zu verlegende Kurzrohr wird über Tage an der in Längsachsenrichtung genau festgelegten Stelle mit der genau passenden Abgangsöffnung versehen. Dies kann mit beliebigen Verfahren, beispielsweise durch Fräsen, erfolgen.

Das so vorbereitete Kunststoffrohrstück, dessen Abgangsöffnung in Kanallängsrichtung genau festgelegt ist, muß nun an das vorhergehende Rohrstück angeschlossen werden. Dies erfolgt mit Hilfe einer innerhalb des Abwasserrohrs verfahrbaren Transportvorrichtung, die von der jeweils anderen, noch nicht sanierten Kanalseite eingefahren wird.

Ein solches Verfahren läßt sich schnell und zuverlässig durchführen. Es erlaubt eine schnelle Anbringung von Abzweigöffnungen in den Kunststoffrohrstücken über Tage und einen genauen Einbau unter Tage ohne Tiefbauarbeiten.

Bevorzugte Ausgestaltungen der Erfindung sind in den Unteransprüchen beschrieben.

Die Transportvorrichtung ist entweder selbstfahrend ausgebildet oder wird mit Hilfe eines Zugseils oder eines Schubgestänges vorgefahren und nimmt das die seitliche Abgangsöffnung aufweisende Kunststoffrohrstück mit. Hierzu weist die Transportvorrichtung eine Aufnahme auf, die das Rohrstück von dessen Innenseite aus ergreift. Damit das Kunststoffrohrstück nach Möglichkeit nicht an der Innenwand des zu sanierenden Abwasserrohrs schleift, wird es in die richtige Lage angehoben oder abgesenkt. Sobald das neue Kunststoffrohrstück benachbart zu dem bereits verlegten Kunststoffrohrstück liegt, wird es so weit abgesenkt, daß es mit dem benachbarten, bereits fest verlegten Kunststoffrohrstück fluchtet. Über eine innen verfahrbare Fernsehkamera erfolgt noch eine Kontrolle, ob die Abgangsöffnung die richtige Orientierung zur Abgangsöffnung des Abzweigs aufweist. Wenn dies nicht der Fall ist, wird über einen motorischen Antrieb an der Transportvorrichtung das Kunststoffrohrstück so weit verdreht, bis die Abgangsöffnung genau mit der Öffnung der Abzweigstelle fluchtet. In dieser ausgerichteten und verdrehten Position wird das mit der seitlichen Abgangsöffnung versehene Kunststoffrohrstück in das bereits fest verlegte neue Rohrstück eingeschoben oder eingezogen.

Nachstehend wird ein Ausführungsbeispiel einer Vorrichtung zur Durchführung des Verfahrens schematisch anhand der Zeichnung beschrieben.

Es zeigen:

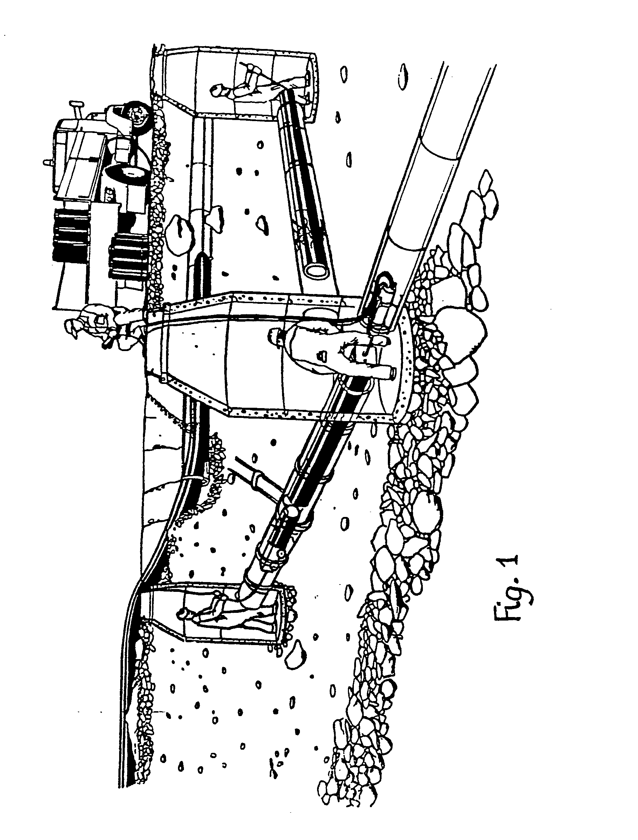

Figur 1 eine schematische Darstellung einer Baustelle zum Sanieren von Abwasserleitungen mit kurzen Kunststoffrohrstücken,

Figur 2 einen Längsschnitt durch eine Abzweigstelle mit einer Transportvorrichtung und Kunststoffrohrstücken,

Figur 3 die Darstellung gemäß Figur 2 bei aufgeschobenem Kunststoffrohrstück und expaniderter Manschette,

Figur 4 eine schematische Seitenansicht der Transportvorrichtung,

Figur 5 eine schematische Draufsicht auf die Transportvorrichtung,

Figur 6 eine schematische Stirnansicht der Transportvorrichtung ohne Rohrstücke im zu sanierenden Abwasserrohr.

Ein zu sanierendes Abwasserrohr F weist einen Abgang oder Abzweig G auf. Mit A ist das bereits fertig eingebaute Kunststoffrohrstück bezeichnet, das benachbart zum Abgang G endet. Eine Transportvorrichtung C, die im dargestellten Ausführungsbeispiel auf Rädern läuft, trägt eine Aufnahme 1 mit mehreren radial sich nach außen erstreckenden Armen 1a, die das einzubauende Kunststoffrohrstück B fest von innen erfassen. Die Achse der Aufnahme 1 erstreckt sich parallel zur Rohrachse. Die Transportvorrichtung C wird entweder über eine Schubstange 15 oder über ein Zugseil 18 gemeinsam mit dem aufgeschobenen Kunststoffrohrstück B in Achsrichtung bewegt.

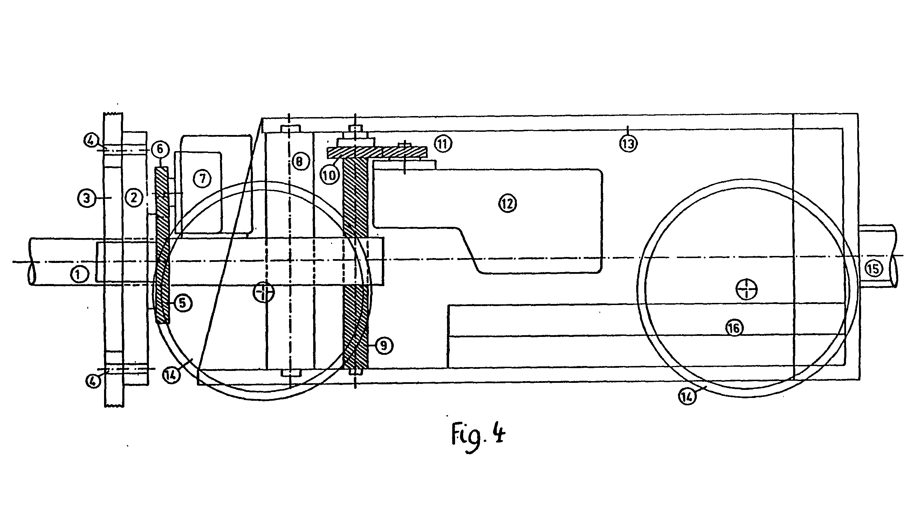

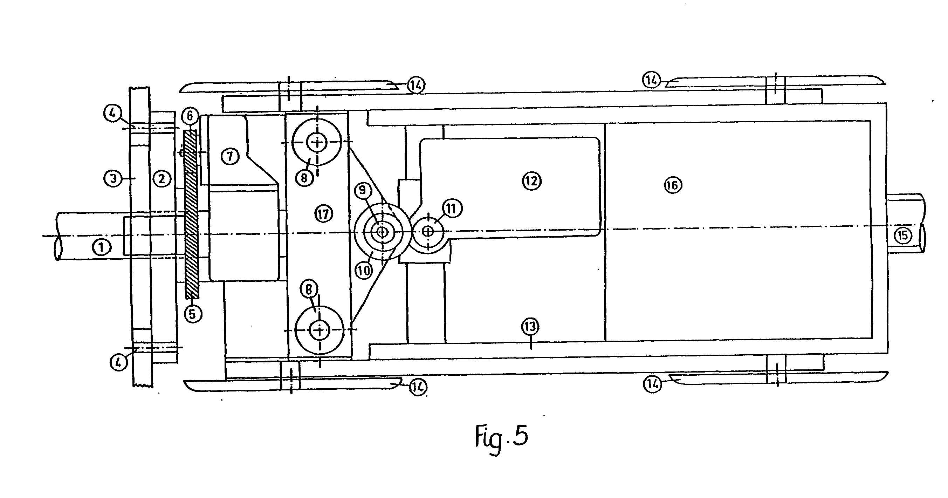

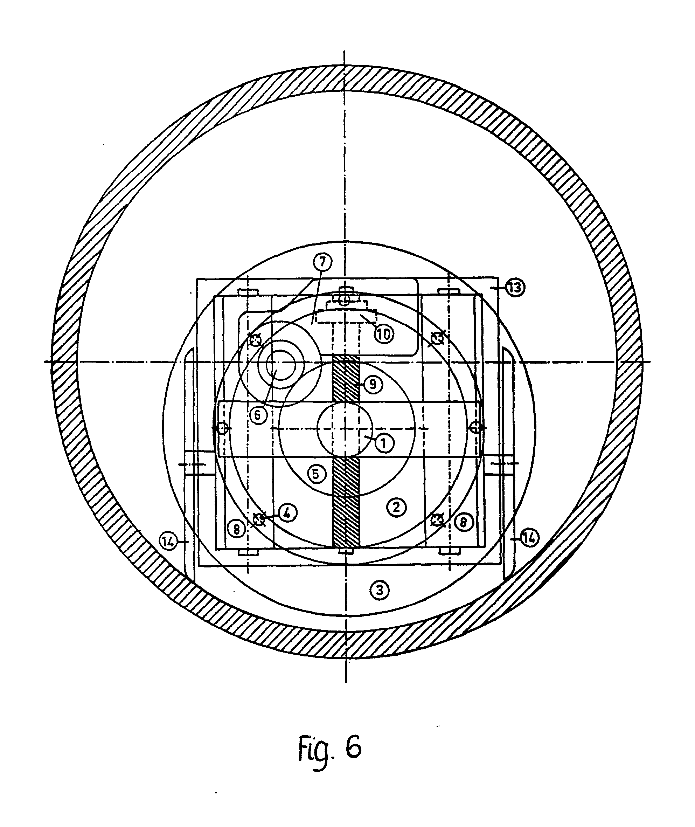

Die Aufnahme 1 für das einzubauende Kunststoffrohrstück B kann über einen ersten Antriebsmotor 7 verdreht und über einen weiteren Antriebsmotor 12 quer zur Rohrachse verfahren werden. Einzelheiten dieser Antriebe werden im Zusammenhang mit Figuren 4 bis 6 nachstehend erläutert.

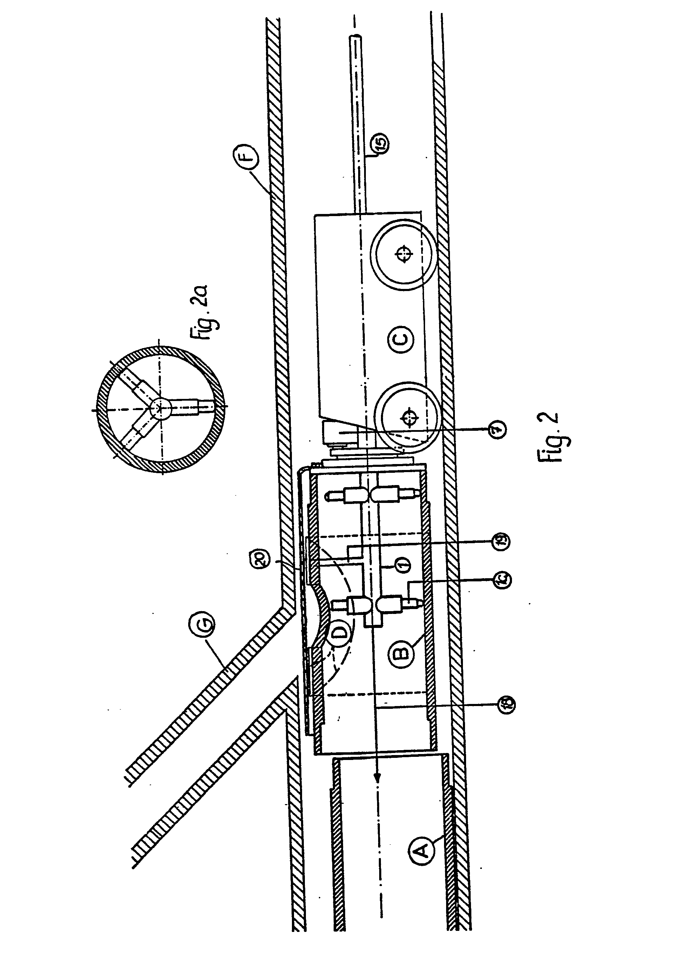

Die Abgangsöffnung E des einzubauenden Kunststoffrohrstücks ist von einer zunächst flach liegenden Manschette D umgeben. Diese Manschette wird üblicherweise (vgl. Figur 2) von einer Schutzhaube 20 überdeckt, die sicherstellt daß die flach liegende Manschette beim Transport durch das zu sanierende Abwasserrohr nicht mechanisch beschädigt wird.

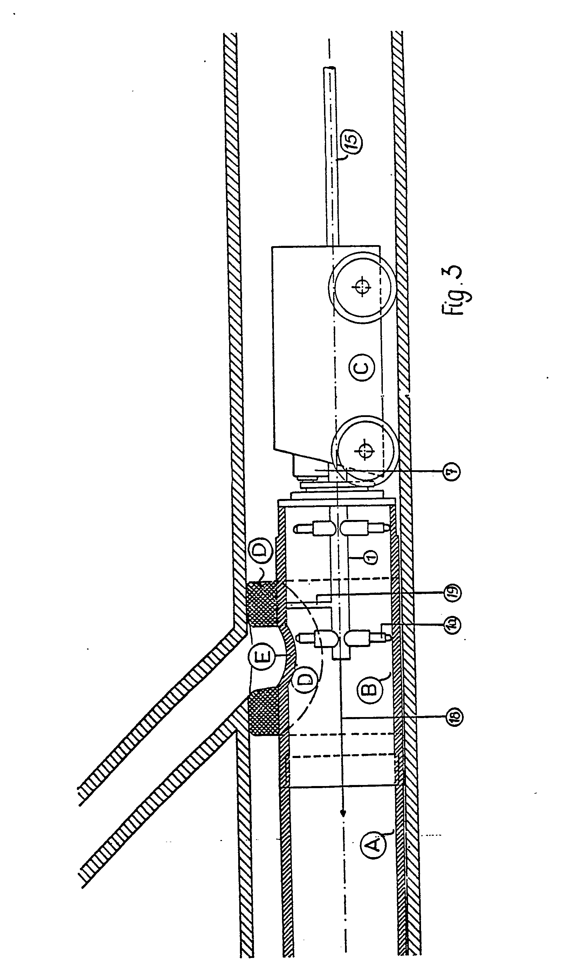

Bei der Ausführungsform gemäß Figur 3 ist eine Schutzhaube nicht vorgesehen.

Nach dem genauen Ausrichten der Abgangsöffnung E zum Abzweig G wird das Kunststoffrohrstück B auf das Ende des bereits eingebauten Kunststoffrohrstücks A geschoben. Danach wird die Manschette D über eine Fülleitung 19 mit Kunststoff oder einem anderen Füllmaterial befüllt. Durch die Anordnung der expaniderten Manschette D ist der die Abgangsöffnung E umgebende Bereich des Ringraums zwischen dem Kunststoffrohrstück B und dem zu sanierenden Abwasserrohr F ausgefüllt. Es ist damit sichergestellt, daß kein Abwasser auf die Außenseite des Kunststoffrohrs gelangen kann.

In den Zeichnungsfiguren 4 bis 6 ist die insgesamt mit C bezeichnete Transportvorrichtung genauer dargestellt. Von der Aufnahme 1 ist in diesen Zeichnungsfiguren lediglich das zentrale Mittelstück sichtbar.

Die Aufnahme 1 besitzt eine stirnseitig angeordnete Platte 2, an der mit Hilfe von Befestigungsschrauben 4 auswechselbare, als Anschlagplatten ausgebildete Anschläge 3 anschraubbar sind. Die unterschiedlichen Durchmesser der Anschlagplatten 3 sind erforderlich für unterschiedliche Kunststoffrohrdurchmesser.

Die Platte 2 ist um eine zentrale Achse drehbar an der Transportvorrichtung C gelagert. Gleichachsig mit der Platte 2 ist ein Zahnrad 5 gelagert, das mit einem Antriebsrad 6 im Eingriff steht. Das Antriebsrad 6 wird von einem elektrischen Antriebsmotor 7 angetrieben, der nach beiden Seiten drehen kann. Mit diesem Antriebsmotor 7 kann das Verdrehen des einzubauenden Kunststoffrohrstücks ferngesteuert erfolgen.

Der Antriebsmotor 7 und die Aufnahme mit Drehantrieb sind an einer Führungstraverse 17 befestigt, die auf zueinander parallel angeordneten Führungen 8 verfahrbar ist. Parallel zu den Führungen 8 erstreckt sich eine Spindel 9, die mit einer Spindelmutter an der Führungstraverse 17 im Eingriff steht. Am oberen Ende der Spindel 9 ist ein Zahnrad 10 fest mit der Spindel verbunden. Das Zahnrad 10 steht mit dem Antriebsrad 11 eines zweiten Antriebsmotors L2 im Eingriff.

Der Antriebsmotor 12 kann in beide Richtungen drehen. Hierdurch erfolgt ein entsprechendes Verdrehen der Spindel und damit ein Anheben oder Absenken der Führungstraverse. Es wird dabei das in der Aufnahme 1 gehaltene Kunststoffrohrstück entsprechend aufwärts oder abwärts verfahren.

Mit 14 sind die Laufräder der Transportvorrichtung bezeichnet. Statt Laufrädern können auch Kufen vorgesehen sein. Am hinteren ende der Transportvorrichtung C ist ein Schubgestänge 15 dargestellt, das ebenso wie das alternativ in Figuren 2 und 3 dargestellte Zugseil 18 zum Verfahren der Transportvorrichtung C verwendet werden kann.

In der Schubstange 15 sind auch die verschiedenen Versorgungsleitungen enthalten, unter anderem die Versorgungsleitung, die über eine Fülleitung 19 Kunststoff in das Innere der Manschette D fördern kann.

Mit 16 ist Ballast bezeichnet, der sicherstellt, daß die Transportvorrichtung nicht unter dem Gewicht des Kunststoffrohrstücks und der Aufnahme nach vorne abkippt.

Wenn — wie bei der Ausführungsform gemäß Figur 2 — die Schutzhaube 20 vorgesehen ist, muß zunächst die Transportvorrichtung nach Einziehen der Spreizarme 1a nach rechts, also zurückgefahren werden, bevor das Expandieren der Manschette D vorgenommen werden kann. Bei einer solchen Konstruktion ist eine andere Art der Fülleitung erforderlich als in den Figuren 2 und 3 dargestellt, beispielsweise eine flexible Fülleitung.

## Patentansprüche

1. Vorrichtung zum Einbau von Kunststoffrohrstücken in zu sanierende Abwasserrohre mit seitlichem Abgang, wobei an den Kunststoffrohrstücken eine seitliche Abgangsöffnung angebracht ist, die bei eingebautem Kunststoffrohrstück an der Stelle des Abgangs liegt, mit einer Transportvorrichtung (C) zum Transportieren und Zusammenfügen der Kunststoffrohrstücke innerhalb der Abwasserrohre, dadurch gekennzeichnet, daß die Transportvorrichtung (C) eine Aufnahme (1, 1a) für das Kunststoffrohrstück (B) aufweist, die mittels eines Antriebs (5, 6, 7; 9, 10, 11, 12) um die Rohrachse verdrehbar ist.

2. Vorrichtung nach Anspruch 1, dadurch gekennzeichnet, daß die Aufnahme (1, 1a) mittels eines Antriebs (5, 6, 7; 9, 10, 11, 12) quer zur Rohrachse verfahrbar ist.

3. Vorrichtung nach Anspruch 1 oder 2, dadurch gekennzeichnet, daß die Aufnahme (1, 1a) zum Ergreifen des Kunststoffrohrstücks (B) von dessen Innenseite aus ausgebildet ist.

4. Vorrichtung nach Anspruch 1 oder 2, dadurch gekennzeichnet, daß die Aufnahme (1, 1a) für das Kunststoffrohrstück einen Anschlag (3) für dessen Stirnende aufweist.

5. Vorrichtung nach einem der Ansprüche 1 bis 4, dadurch gekennzeichnet, daß die Aufnahme (1, 1a) über eine Spindel (9) und eine Spindelmutter quer zur Rohrachse verfahrbar ist.

6. Vorrichtung nach einem der Ansprüche 1 bis 7, dadurch gekennzeichnet, daß die Aufnahme (1, 1a) mittels eines Zahnradgetriebes (5, 6, 7) um die Rohrachse verdrehbar ist.

7. Vorrichtung nach Anspruch 5 oder 6, dadurch gekennzeichnet, daß die Aufnahme (1, 1a) in einer parallel zur Achse von Spindel (9) und Spindelmutter sich erstreckenden länglichen Führung (8) geführt ist.

8. Vorrichtung nach einem der Ansprüche 1 bis 7, dadurch gekennzeichnet, daß die Transportvorrichtung (C) Laufräder (14) aufweist.

9. Vorrichtung nach einem der Ansprüche 1 bis 7, dadurch gekennzeichnet, daß die Transportvorrichtung (C) Gleitkufen aufweist.

10. Vorrichtung nach einem der Ansprüche 1 bis 7, dadurch gekennzeichnet, daß die Transportvorrichtung (C) über eine Schubstange (15) angetrieben ist.

11. Vorrichtung nach einem der Ansprüche 1 bis 7, dadurch gekennzeichnet, daß die Transportvorrichtung (C) über ein Zugseil (18) angetrieben ist.

12. Vorrichtung nach einem der Ansprüche 1 bis 11, dadurch gekennzeichnet, daß die Transportvorrichtung eine die Manschette (D) des Kunststoffrohrstücks (B) übergreifende Schutzhaube (20) aufweist.

## Revendications

1. Dispositif pour incorporer des tuyaux en matière plastique dans des égouts devant être assainis avec sortie latérale, les tuyaux en matière plastique à incorporer étant pourvus d'un orifice de sortie, situé à l'emplacement de la sortie lorsque le tuyau en question est incorporé, avec un dispositif de transport (C) pour convoyer et aboucher, à l'intérieur des canalisations d'égouts, les tuyaux à incorporer, caractérisé par le fait que le dispositif de transport (C) présente un porte-tuyau (1, 1a) pour le tuyau en matière plastique à incorporer (B), pouvant tourner autour de l'axe du tuyau à l'aide d'un entraînement (5, 6, 7; 9, 10, 11, 12).

2. Dispositif selon revendication 1, caractérisé par le fait que le porte-tuyau (1, 1a) peut être conduit transversalement par rapport à l'axe du tuyau à l'aide d'un entraînement (5, 6, 7; 9, 10, 11, 12).

3. Dispositif selon revendication 1 ou 2, caractérisé par le fait que le porte-tuyau 1, 1a) est conçu pour saisir le tuyau en matière plastique (B) à l'intérieur de celui-ci.

4. Dispositif selon revendication 1 ou 2, caractérisé par le fait que le porte-tuyau (1, 1a) présente une butée (3) pour la partie frontale du tuyau en matière plastique.

5. Dispositif selon l'une des revendications de 1 à 4, caractérisé par le fait que le porte-tuyau peut être conduit transversalement par rapport à l'axe du tuyau à l'aide d'une broche (9) et d'un boulon à broche.

6. Dispositif selon l'une des revendications de 1 à 7, caractérisé par le fait que le porte-tuyau (1, 1a) peut être tourné autour de l'axe du tuyau à l'aide d'un engrenage à roues dentées (5, 6, 7).

7. Dispositif selon revendication 5 ou 6, caractérisé par le fait que le porte-tuyau (1, 1a) est guidé dans une conduite longitudinale (8) s'étendant parallèlement à l'axe de la broche (9) et de l'écrou de broche.

8. Dispositif selon l'une des revendications de 1 à 7, caractérisé par le fait que le dispositif de transport (C) est pourvu de roues de roulement (14).

9. Dispositif selon l'une des revendications de 1 à 7, caractérisé par le fait que le dispositif de transport (C) présente des patins de glissement.

10. Dispositif selon l'une des revendications de 1 à 7, caractérisé par le fait que le dispositif de transport (C) est commandé par l'intermédiaire d'une tringle de poussée (15).

11. Dispositif selon l'une des revendications de 1 à 7, caractérisé par le fait que le dispositif de transport (C) est commandé par l'intermédiaire d'un câble de traction (18).

12. Dispositif selon l'une des revendications de 1 à 11, caractérisé par le fait que le dispositif de transport présente un capuchon de protection (20) embrassant la manchette (D) du tuyau en matière plastique (B).

## Claims

1. An invention for installing synthetic pieces of pipe into drainage systems that are being repaired and that have side exits. The pieces of pipe have a side opening which is located at the exit when installed. The invention also includes a transport device (C) for transporting and joining the pieces of pipe inside the drainage system. The invention is characterized by the fact that: the transport device (C) has a pick-up (1, 1a) for holding pieces of pipe (B) that can be rotated with a driving mechanism (5, 6, 7; 9, 10, 11, 12) around the axis of the pipe.

2. Equipment based on Claim 1, characterized by the fact that the pick-up (1, 1a) is run by a driving mechanism (5, 6, 7; 9, 10, 11, 12) running transversely to the axis of the pipe.

3. Equipment based on Claim 1 or 2, characterized by the fact that the pick-up (1, 1a) is designed to hold the pipe (B) from the inside of the pipe.

4. Equipment based on Claim 1 or 2, characterized by the fact that the pick-up (1, 1a) for holding the pipe has a buffer (3) for the front side.

5. Equipment based on one of Claims 1 to 4, characterized by the fact that the pick-up (1, 1a) is run by a spindle (9) and a spindle nut running transversely to the axis of the pipe.

6. Equipment based on one of Claims 1 to 7, characterized by the fact that the pick-up (1, 1a) is rotated around the axis of the pipe by a cogged wheel-work (5, 6, 7).

7. Equipment based on Claim 5 or 6, characterized by the fact that the pick-up (1, 1a) is driven along longitudinal rails running parallel to the axis of the spindle (9) and spindle nut.

8. Equipment based on one of Claims 1 to 7, characterized by the fact that the transport device (C) has running wheels (14).

9. Equipment based on one of Claims 1 to 7, characterized by the fact that the transport device (C) has guiding runners.

10. Equipment based on one of Claims 1 to 7, characterized by the fact that the transport device (C) is moved by a slide rod (15).

11. Equipment based on one of Claims 1 to 7, characterized by the fact that the transport device (C) is moved by a traction cable (18).

12. Equipment based on one of Claims 1 to 11, characterized by the fact that the transport device has a protective cap (20) covering the collar (D) of the piece of pipe (B).

Fig. 1

EP 0 158 042 B1

Fig. 2a

Fig. 2

2

Fig.3

EP 0 158 042 B1

Fig. 4

4

EP 0 158 042 B1

Fig. 5

5

Fig. 6